# DEMANDE DE BREVET EUROPEEN

(11) **EP 0 816 803 A1**
(43) Date de publication de la demande: **07.01.1998**
(21) Numéro de dépôt: 97401576.0
(22) Date de dépôt: 03.07.1997
(51) Int. Cl.: G01C 21/20, G09B 29/10, G08G 1/0968

(54) **Système d'aide à la navigation et terminal de navigation pour un tel système**

(30) Priorité: 05.07.1996 FR 9608378
(71) Demandeur: SAGEM SA, 75116 Paris (FR)
(72) Inventeur: Charbonnier, Philippe, 78600 Le Mesnil le Roi (FR)
(74) Mandataire: Bloch, Gérard

(57) **Abrégé**

Le Système d'aide à la navigation comporte des moyens de localisation (20) à la disposition d'un navigateur pour lui fournir sa position géographique à partir d'informations issues de moyens sensibles à son déplacement (GPS), et un serveur (1) de données représentatives de cartes géographiques, relié à un émetteur radio (4), et un terminal radio (11) de navigation et de restitution des données et agencé pour coopérer avec les moyens de localisation (20) en associant les données de localisation aux données des cartes.

## Description

La navigation à la surface du globe terrestre nécessite, d'une part, de pouvoir déterminer des coordonnées géographiques de position absolue et, d'autre part, de disposer d'une carte géographique pour exploiter l'information de position absolue en la transformant en une position relative par rapport aux reliefs, voies de communication et villes représentés sur la carte.

Si l'on prend l'exemple d'un automobiliste, il peut disposer d'un récepteur GPS (Système de Positionnement Global) embarqué ou d'un dispositif équivalent mesurant les déplacements de son véhicule et fournissant les coordonnées géographiques de la position de celui-ci.

L'automobiliste peut en outre se procurer des cartes géographiques sur papier ou encore sous forme de données représentatives d'une région, mémorisées dans une cassette pouvant être lue par un lecteur/afficheur embarqué.

Il suffit alors de reporter les coordonnées géographiques de position sur la carte. Encore faut-il disposer de la carte de la région concernée, puisque la seule connaissance des coordonnées de position est inexploitable.

Cette nécessité est une lourde contrainte puisqu'elle impose l'achat d'une bibliothèque de cartes, pour laquelle il faut réserver un volume de stockage important, et qu'il faut constamment la tenir à jour.

La présente invention vise à éviter ces contraintes.

A cet effet, l'invention concerne tout d'abord un système d'aide à la navigation, comportant des moyens de localisation destinés à être mis à la disposition d'un navigateur au moins, pour lui fournir sa position géographique à partir d'informations issues de moyens sensibles à son déplacement, système caractérisé par le fait qu'il comporte un serveur de données représentatives de cartes géographiques, relié à un émetteur radio, et un terminal radio de navigation et de restitution desdites données et agencé pour coopérer avec les moyens de localisation.

L'invention concerne aussi un terminal de navigation caractérisé par le fait qu'il est agencé pour recevoir par radio des données représentatives de cartes géographiques et pour recevoir des données de localisation et qu'il comporte des moyens pour associer les données de localisation aux données des cartes.

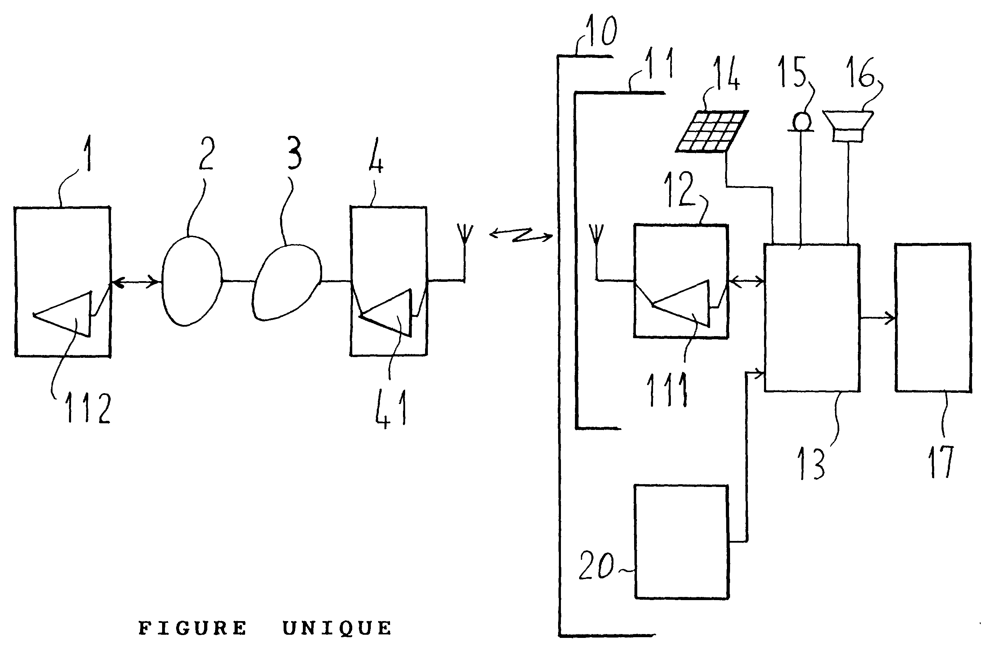

L'invention sera mieux comprise à l'aide de la description suivante d'une forme de réalisation préférée du système d'aide à la navigation de l'invention, en référence à la figure unique annexée qui le représente schématiquement.

Le système représenté comporte un serveur 1 de données représentatives de cartes géographiques, relié à un émetteur radio 4, ici à travers le réseau téléphonique commuté (RTC) 2 et le réseau radio GSM 3, dont fait partie l'émetteur 4. Il s'agit ici en fait d'une pluralité d'émetteurs GSM 4 ayant chacun une zone de couverture radio particulière.

Le système comporte en outre au moins un équipement 10, ici embarqué à bord d'une voiture, constitué de moyens 20 de localisation, ou détermination de position géographique, et d'un terminal radio 11 de navigation et de restitution des données ci-dessus.

Le terminal 11 comporte un récepteur radio GSM 12 d'aide à la navigation, tandis que les moyens de localisation 20 sont ici constitués par un poste ou récepteur GPS 20 (Système de Positionnement Global) fournissant des données de localisation de la voiture. D'autres moyens 20, comme par exemple un odomètre, une centrale innertielle, sont envisageables.

Le récepteur radio GSM 12 de réception des données du serveur 1 commande un afficheur 17 de restitution des données, présentant la carte au conducteur de la voiture ou à un passager, s'occupant de la navigation. Dans cet exemple, le navigateur évoqué ci-dessus, n'est pas contraint de reporter sur la carte (17) les coordonnées géographiques fournies par le GPS 20 car ceci est effectué par un circuit 13, alimenté en données par le récepteur récepteur 12 et le GPS 20, associant les données de localisation aux données de la carte pour commander l'afficheur 17. La position apparaît ainsi sous forme graphique et non numérique. Pour le report de position ci-dessus, les données représentatives de chaque carte comportent au moins un repère de position géographique d'un point de la carte, par exemple la position absolue (géographique) d'un coin de celle-ci, et une indication d'échelle, si celle-ci peut varier, par exemple la position absolue d'un autre coin. En pratique, le récepteur GSM 12 peut être intégré avec le récepteur GPS 20 et les circuits 13 et 17 pour former un ensemble compact.

Dans cet exemple, les données représentatives de cartes géographiques se présentent sous un format de messages de données de télécopie, que le RTC 2 et le GSM 3 transmettent de façon classique. Le serveur 1 comporte une bibliothèque de cartes géographiques pouvant être sélectionnées et transmises à tout terminal tel que le terminal 11. Le récepteur 12 fonctionne aussi en émetteur, par un circuit radio 111, pour la fonction téléphonique GSM d'une façon générale, et en particulier pour appeler le serveur 1 et y sélectionner une carte par l'intermédiaire d'un circuit radio récepteur 41 de l'émetteur 4 relié au serveur 1 par les réseaux 3 et 2.

Pour lancer un appel, le circuit de traitement 13 est relié à un clavier 14, à touches de numérotation et touches de fonction, permettant d'émettre des données radio de sélection par le circuit 111, et à un microphone 15 associé à un haut-parleur 16.

En réponse à l'appel du terminal 11, le serveur 1 présente un menu, vocal ou de données affichées, et le navigateur effectue la sélection voulue par commande vocale (15) ou par envoi de données numériques à partir du clavier 14. Le circuit émetteur 111 télécommande alors, par le récepteur radio 41 et à travers les réseaux 3 et 2, des circuits 112 du serveur 1, de sélection, lecture et émission de données de carte géographique.

Il est en outre ici prévu que les cartes reçues puissent être réémises par le récepteur/émetteur 12 vers tout correspondant voulu, avec éventuellement un marquage du report de la position du mobile qui a été effectué par le circuit 13; on peut ainsi émettre par télécopie tout ou partie de la carte affichée par l'afficheur 17.

Le circuit 13 gère le protocole de télécopie. En particulier, le circuit 13 comporte un processeur de signal (DSP) effectuant le codage/décodage pour la téléphonie GSM et la transmission des données, incluant la gestion de la mise en forme voulue pour les transmissions de télécopies sur GSM, selon les normes GSM 04-21 et 03-45, le traitement des trames HDLC, le décodage selon les protocoles T4 et T6. Un microcontrôleur du circuit 13 gère des tâches plus lentes, comme les relations homme-machine, la signalisation GSM sur canal D, le signalement automatique de position vers l'émetteur-récepteur, ou base radio, 4, le protocole de télécopie T30 modifié GSM, le traitement des informations GPS 20 et la gestion de l'afficheur 17.

En variante, il peut être prévu que les cartes soient fournies sans nécessité d'une demande explicite.

Pour cela, la transmission de la carte intervient automatiquement dès que la voiture s'identifie (111) auprès du récepteur radio (41), c'est-à-dire qu'elle pénètre dans la zone de couverture de l'ensemble émetteur/récepteur 4. L'émetteur/récepteur radio 4 fournit alors (41) cette information au serveur 1 et sélectionne ainsi (112) les données représentatives d'une carte comportant la zone de couverture radio concernée et éventuellement les cartes voisines, et évite ainsi l'émission de cartes sans intérêt pour le mobile, ici la voiture. L'émetteur/récepteur 4 constitue ainsi fonctionnellement un détecteur de déplacement commandant le serveur 1 et se substitue au navigateur pour sélectionner automatiquement la carte pertinente, qu'il émet en retour vers l'équipement 10.

Dans l'exemple ci-dessus et sa variante, il s'agit de liaisons radio en mode cellulaire, GSM, c'est-à-dire point-à-point.

Dans une autre variante, il peut être prévu que le serveur soit associé à un émetteur de diffusion radio, c'est-à-dire que toutes les cartes en bibliothèque soient par exemple diffusées cycliquement et reçues simultanément, sans restriction, par les récepteurs embarqués de divers véhicules, quitte à ce que ceux-ci ne mémorisent que celles les concernant. On peut par exemple songer au système RDS à 10 kb/s (Système de Données Radio) ou DAB (Digital Audio Broadcast).

Un lecteur de carte à mémoire, comme une carte à puce, peut être associé au récepteur 12 pour contrôler l'exploitation de celui-ci, c'est-à-dire l'accès au service de diffusion correspondant, moyennant un paiement électronique au coup par coup ou un abonnement reporté sur la carte à puce.

L'invention n'est évidemment pas limitée à un type particulier de mobile ni au protocole de transmission et de compression de données de la télécopie T4, T6 et T30. On peut, entre autres, songer à des codages informatiques genre TIFF ou PCX ou à la télécopie couleur (JPEG ou JBIG) permettant de recevoir tout type de données, au format souhaité.

## Revendications

1. Système d'aide à la navigation, comportant des moyens de localisation (20) destinés à être mis à la disposition d'un navigateur au moins, pour lui fournir sa position géographique à partir d'informations issues de moyens sensibles à son déplacement, système caractérisé par le fait qu'il comporte un serveur (1) de données représentatives de cartes géographiques, relié à un émetteur radio (4), et un terminal radio (11) de navigation et de restitution desdites données et agencé pour coopérer avec les moyens de localisation (20).

2. Système selon la revendication 1, dans lequel le serveur (1) est relié à l'émetteur (4) par un réseau (2; 3) de transmission de données.

3. Système selon l'une des revendications 1 et 2, dans lequel le serveur (1) est relié à un émetteur-récepteur radio (4, 41) et le terminal de navigation (11) comporte des moyens émetteurs (111) pour s'identifier auprès du récepteur radio (41) du serveur et commander la lecture des données du serveur (1) et leur émission vers le terminal de navigation (11).

4. Système selon l'une des revendications 1 et 2, dans lequel l'émetteur (4) du serveur est agencé pour émettre les données par diffusion.

5. Terminal de navigation (11) caractérisé par le fait qu'il est agencé pour recevoir par radio des données représentatives de cartes géographiques et pour recevoir (12) des données de localisation (20) et qu'il comporte des moyens (13) pour associer les données de localisation aux données des cartes.

6. Terminal selon la revendication 5, dans lequel les données de cartes sont transmises dans un format télécopie.

7. Terminal selon l'une des revendications 5 et 6, dans lequel il est prévu des moyens émetteurs (111) d'interrogation d'un serveur (1) de données représentatives de cartes géographiques.

8. Terminal selon l'une des revendications 5 à 7, caractérisé par le fait qu'il est agencé pour fonctionner dans un mode cellulaire.

9. Terminal selon l'une des revendications 5 à 8, caractérisé par le fait qu'il est agencé pour coopérer avec un poste GPS (20).

10. Terminal selon l'une des revendications 5 à 9, caractérisé par le fait qu'il comporte des moyens (111, 13) de ré-émission radio.
